# EUROPÄISCHE PATENTSCHRIFT

(11) **EP 0 903 363 B1**
(45) Veröffentlichungstag und Bekanntmachung des Hinweises auf die Patenterteilung: **28.09.2005**
(21) Anmeldenummer: 98117854.4
(22) Anmeldetag: 21.09.1998
(51) Int. Cl.: C08G 18/67, C08G 18/12, C08G 18/72, C09D 175/16, C08G 18/10

(54) **Verfahren zur Herstellung strahlungshärtbarer, Urethangruppen enthaltender Prepolymere**
Process for the preparation of radiation-curable prepolymers containing urethane groups
Procédé de préparation de prépolymères photodurcissables contenant des groupements uréthanes

(30) Priorität: 22.09.1997 DE 19741781; 02.04.1998 DE 19814874
(43) Veröffentlichungstag der Anmeldung: 24.03.1999
(73) Patentinhaber: BASF Aktiengesellschaft, 67056 Ludwigshafen (DE)
(72) Erfinder: Schwalm, Reinhold, Dr., 67157 Wachenheim (DE); Königer, Rainer, Dr., 67061 Ludwigshafen (DE); Paulus, Wolfgang, Dr., 55128 Mainz (DE); Reich, Wolfgang, Dr., 67133 Maxdorf (DE); Beck, Erich, Dr., 68526 Ladenburg (DE); Lokai, Matthias, Dr., 67677 Enkenbach-Alsenborn (DE); Menzel, Klaus, 67069 Ludwigshafen (DE)
(74) Vertreter: Kinzebach, Werner

(56) Entgegenhaltungen:
- WO-A-94/12554
- DE-A- 4 404 616
- US-A- 5 137 972
- US-A- 5 322 861

## Beschreibung

Die vorliegende Erfindung betrifft ein Verfahren zur Herstellung von strahlungshärtbaren, Urethangruppen enthaltenden Prepolymeren, wobei man eine Isocyanatgruppe enthaltende Komponente A mit einer OH-Gruppen enthaltenden Komponente B umsetzt. Die vorliegende Erfindung betrifft auch die durch dieses Verfahren erhältlichen, strahlungshärtbaren, Urethangruppen enthaltenden Prepolymere.

Strahlungshärtbare, Urethangruppen enthaltende Prepolymere finden in der Technik eine breite Anwendung, beispielsweise als Photoresists und als Komponenten in hochwertigen Beschichtungsmaterialien. Sie weisen in der Regel wenigstens zwei ethylenisch ungesättigte Doppelbindungen pro Molekül auf, die unter Einwirkung energiereicher Strahlung, beispielsweise UV-Licht oder Elektronenstrahlung, polymerisieren und ein hochmolekulares Netzwerk bilden. Beschichtungen auf der Basis von strahlungshärtbaren, Urethangruppen enthaltenden Prepolymeren zeichnen sich in der Regel durch eine hohe Widerstandsfähigkeit gegenüber mechanischen oder chemischen Einflüssen aus.

Einen Überblick über ethylenisch ungesättigte, Urethangruppen enthaltende Prepolymere findet sich beispielsweise in P. K. T. Oldring (Hrsg.), Chemistry and Technology of UV- and EB-Formulations for Coatings, Inks and Paints, Vol. II, SITA Technology, London, 1991, S. 73-123.

Aus der DE-A-4 007 146 sind beispielsweise Urethanacrylat-Verbindungen bekannt, die durch Umsetzung von Polyisocyanaten mit Hydroxyalkylacrylaten, gefolgt von einer Umsetzung mit primären oder sekundären Aminen, erhältlich sind. Die unter Verwendung dieser Verbindungen erhältlichen Beschichtungen zeichnen sich durch eine hohe Elastizität und eine hohe Oberflächenhärte aus. Die Umsetzung von Isocyanaten mit Polyolen und Hydroxyalkylacrylaten ist beispielsweise in DE 27 26 041 A, US 4,260,703 und US 4,481,093 und die Umsetzung von Isocyanaten mit Hydroxyalkylacrylaten in JP 63297369 und JP 59157112 beschrieben.

Die DE-A-44 04 616 beschreibt die Verwendung von UV-härtbaren Beschichtungsmitteln auf Basis von Urethanacrylaten aus Hydroxyalkylacrylaten und Isocyanuratgruppen aufweisenden Polyisocyanaten. Der Einsatz von wenigstens zwei verschiedenen Polyisocyanaten, wovon wenigstens eines eine trifunktionelle Isocyanatverbindung ist, ist nicht beschrieben.

Die US 5,322,861 beschreibt Urethanacrylat-Oligomere, die durch Umsetzung von Urethangruppen-haltigen Prepolymeren mit Hydroxyalkylacrylaten und/oder -methacrylaten erhalten werden.

Die Urethanacrylate des Standes des Technik sind oftmals hinsichtlich ihrer Lagerstabilität problematisch. Insbesondere bei Lagerung bei niedrigen Temperaturen agglomerieren sie und trüben ein. Diesem Problem kann grundsätzlich durch Verdünnen der Urethanacrylate mit geeigneten Lösungsmitteln abgeholfen werden. Bei inerten Lösungsmitteln ist jedoch ihre Entfernung vor der Aushärtung im Regelfall erforderlich. Dieser zusätzliche Arbeitsschritt ist nicht zuletzt aus Kostengründen unerwünscht. Dem Verdünnen mit sogenannten Reaktivverdünnern - hierunter versteht man niedermolekulare, ethylenisch ungesättigte Verbindungen, die beim Härten mit den ethylenisch ungesättigten Prepolymeren polymerisieren und somit in die Beschichtung eingebaut werden - sind naturgemäß durch das gewünschte Eigenschaftsprofil der Beschichtungen Grenzen gesetzt. In der Regel trüben auch Zubereitungen aus Urethangruppen enthaltenden Prepolymeren und Reaktivverdünnern bereits nach wenigen Tagen ein.

Der vorliegenden Erfindung liegt die Aufgabe zu Grunde, strahlungshärtbare, Urethangruppen enthaltende Prepolymere mit verbesserter Lagerstabilität bereitzustellen. Zudem sollen Beschichtungen auf Basis derartiger Prepolymere nur eine geringe Vergilbungsneigung, eine hohe Härte und eine möglichst hohe Flexibilität aufweisen.

Es wurde nun überraschenderweise gefunden, dass man zu Urethangruppen enthaltenden Prepolymeren mit dem gewünschten Eigenschaftsprofil gelangt, wenn man eine Isocyanatgruppen enthaltende Komponente A, die wenigstens ein trifunktionelles Isocyanat A1 und gegebenenfalls ein difunktionelles Isocyanat A2 enthält mit einer OH-Gruppen enthaltenden Komponente B, die wenigstens eine ethylenisch ungesättigte, OH-Gruppen enthaltende Verbindung umfasst, umsetzt.

Demnach betrifft die vorliegende Erfindung ein Verfahren zur Herstellung von strahlungshärtbaren, Urethangruppen enthaltenden Prepolymeren, wobei man eine Isocyanatgruppen enthaltende Komponente A mit einer OH-Gruppen enthaltenden Komponente B umsetzt, das dadurch gekennzeichnet ist, dass die Komponente A wenigstens eine trifunktionelle Isocyanatverbindung A1 und gegebenenfalls eine oder mehrere difunktionelle Isocyanatverbindungen A2 umfasst und die OH-Gruppen enthaltende Komponente B wenigstens eine ethylenisch ungesättigte Verbindung B1 mit wenigstens einer reaktiven OH-Gruppe und gegebenenfalls davon verschiedene OH-Gruppen enthaltende Verbindungen B2 umfasst, wobei die Komponente A wenigstens zwei verschiedene Isocyanatverbindungen A1 oder wenigstens eine Isocyanatverbindung A1 und wenigstens eine Isocyanatverbindung A2 umfasst. Die vorliegende Erfindung betrifft auch die nach dem erfindungsgemäßen Verfahren erhältlichen strahlungshärtbaren, Urethangruppen enthaltenden Prepolymere.

Gemäß einer Ausführungsform des erfindungsgemäßen Verfahrens umfasst somit die Komponente B wenigstens zwei verschiedene Verbindungen B1, wenn die Komponente A keine difunktionelle Isocyanatverbindung A2 enthält.

Gemäß einer weiteren Ausführungsform umfasst die Komponente A ein Gemisch aus wenigstens zwei verschiedenen Isocyanatverbindungen A1a und A1b und gegebenenfalls wenigstens eine Isocyanatverbindung A2, vorzugsweise aber keine Verbindung A2. Die so erhältlichen Prepolymere sind auch zugänglich durch Vermischen eines Prepolymers aus einer Isocyanatverbindung A1a und der Komponente B mit einem Prepolymer aus einer Isocyanatverbindung A1b und der Komponente B. Bei dieser Ausführungsform des Verfahrens gelangt man zu besonders lagerstabilen Prepolymeren.

Geeignete trifunktionelle Isocyanatverbindungen A1 sind sowohl Verbindungen mit definierter Summenformel, die 3 NCO-Gruppen pro Molekül aufweisen, als auch niedermolekulare Oligomere mit einem zahlenmittleren Molekulargewicht Mₙ < 1 000, die im Mittel etwa 3,0 Isocyanatgruppen pro Oligomer-Molekül enthalten.

Vorzugsweise sind die Verbindungen A1 ausgewählt unter den Biurethen und Cyanuraten von Diisocyanaten sowie den Addukten von Diisocyanaten an trifunktionelle aliphatische Alkohole. Geeignete Diisocyanate weisen in der Regel 4 bis 22 C-Atome auf. Die Diisocyanate sind üblicherweise ausgewählt unter aliphatischen, cycloaliphatischen und aromatischen Diisocyanaten, z. B. 1,4-Diisocyanatobutan, 1,6-Diisocyanatohexan, 1,6-Diisocyanato-2,2,4-trimethylhexan, 1,6-Diisocyanato-2,4,4-trimethylhexan, 1,2-, 1,3- und 1,4-Diisocyanatocyclohexan, 2,4- und 2,6-Diisocyanato-1-methylcyclohexan, 4,4'-Bis(isocyanatocyclohexyl)methan, Isophorondiisocyanat (= 1-Isocyanato-3,3,5-trimethyl-5-isocyanatomethylcyclohexan), 2,4- und 2,6-Toluylendiisocyanat, Tetramethylen-p-xylylendiisocyanat (= 1,4-Bis(2-isocyanatoprop-2-yl)benzol), 4,4'-Diisocyanatodiphenylmethan, vorzugsweise 1,6-Diisocyanatohexan und Isophorondiisocyanat, und Mischungen davon. Bevorzugte Verbindungen A1 umfassen die Cyanurate und Biurete aliphatischer Diisocyanate, insbesondere die Cyanurate. Besonders bevorzugte Verbindungen A1 sind das Isocyanurat und das Biuret des Isophorondiisocyanats und das Isocyanurat und das Biuret des 1,6-Diisocyanatohexans. Beispiele für Addukte von Diisocyanaten an trifunktionelle Alkohole sind die Addukte der oben genannten Diisocyanate an Glycerin, Trimethylolethan und Trimethylolpropan, z. B. das Addukt von Toluylendiisocyanaten an Trimethylolpropan, oder die Addukte von 1,6-Diisocyanatohexan oder Isophorondiisocyanat an Trimethylpropan und/oder Glycerin.

Wenn die Komponente A ein Gemisch aus zwei verschiedenen Isocyanatverbindungen A1a und A1b umfasst, handelt es sich vorzugsweise um ein Gemisch aus einem Biuret und einem Isocyanurat eines der oben genannten aliphatischen Diisocyanate, oder um ein Gemisch aus einem derartigen Biuret oder Isocyanurat mit einem Addukt eines der oben genannten aliphatischen Diisocyanate an einen trifunktionellen aliphatischen Alkohol. Besonders bevorzugt wird dabei das gleiche Diisocyanat sowohl für das Biuret als auch das Isocyanurat und das Addukt verwendet. Ganz besonders bevorzugt verwendet man ein Gemisch aus dem Biuret und dem Cyanurat von 1,6-Diisocyanatohexan (Hexamethylendiisocyanat) oder Isophorondiisocyanat.

Geeignete difunktionelle Isocyanatverbindungen A2 sind beispielsweise die oben genannten Diisocyanate, vorzugsweise 2,4- und 2,6-Toluylendiisocyanat, Tetramethyl-p-xylylendiisocyanat, Diphenylmethan-4,4'-diisocyanat und insbesondere Isophorondiisocyanat.

Die Verbindungen B1 der Komponente B sind in der Regel ausgewählt unter den Estern ethylenisch ungesättigter Carbonsäuren wie Acrylsäure, Methacrylsäure, Crotonsäure, Acrylamidoglykolsäure, Methacrylamidoglykolsäure und Vinylessigsäure, mit einem Di- oder Polyol mit vorzugsweise 2 bis 20 C-Atomen, wie Ethylenglykol, Diethylenglykol, Triethylenglykol, 1,2-Propylenglykol, 1,3-Propylenglykol, Diethylenglykol, Triethylenglykol, Dipropylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, Glycerin, Trimethylolethan, Trimethylolpropan, Trimethylolbutan, Pentaerythrit, Ditrimethylolpropan, Erythrit und Sorbit, sofern der Ester wenigstens eine, gegenüber Isocyanat reaktive OH-Gruppe aufweist. Weiterhin können als Verbindung B1 auch die Amide der vorgenannten ethylenisch ungesättigten Carbonsäuren mit Aminoalkoholen z. B. 2-Aminoethanol, 3-Amino-1-propanol, 1-Amino-2-propanol oder 2-(2-Aminoethoxy)ethanol sowie die Vinyl-, Allyl- und Methallylether der vorgenannten Di- oder Polyole eingesetzt werden, sofern sie noch eine freie OH-Gruppe aufweisen. Als Verbindungen B1 werden die Ester der Acrylsäure und der Meth-acrylsäure wie 2-Hydroxyethyl(meth)acrylat, Hydroxypropyl- (meth)acrylat, 1,4-Butandiolmono(meth)acrylat, Neopentylglykolmono(meth)acrylat, Trimethylolpropanmono- und -di(meth)acrylat, Pentaerythritdi- und -tri(meth)acrylat bevorzugt. Besonders bevorzugt ist B1 ausgewählt unter 2-Hydroxyethylacrylat, Hydroxypropylacrylat und 1,4-Butandiolmonoacrylat. Beispiele für Amide ethylenisch ungesättigter Carbonsäuren mit Aminoalkoholen sind 2-Hydroxyethylacrylamid und -methacrylamid, 2- und 3-Hydroxypropyl(meth)acrylamid und 5-Hydroxy-3-oxopentyl(meth)acrylamid.

Die gegebenenfalls in der Komponente B enthaltenen Verbindungen B2 umfassen die in Zusammenhang mit Verbindung B1 genannten Di-oder Polyole, deren Alkoxylierungsprodukte, hydroxylgruppenhaltige Polyester, hydroxylgruppenhaltige Polyether und monofunktionelle Alkanole mit vorzugsweise 1 bis 10 Kohlenstoffatomen und Cycloalkanole mit vorzugsweise 5 bis 10 Kohlenstoffatomen.

Hydroxylgruppenhaltige Polyester können in üblicher Weise durch Veresterung von Dicarbonsäuren mit Diolen oder Polyolen hergestellt werden. Bevorzugte Dicarbonsäuren sind Bernsteinsäure, Glutarsäure, Adipinsäure, Sebacinsäure, o-Phthalsäure, deren Isomere und deren Hydrierungsprodukte sowie die Dialkylester der vorgenannten Säuren, die Umesterungsreaktionen zugänglich sind. Als Diole oder Polyole kommen die in Zusammenhang mit Verbindung B1 genannten Di- oder Polyole in Frage. Zu den hydroxylgruppenhaltigen Polyestern zählen ferner die Caprolactondiole und -triole, deren Herstellung dem Fachmann bekannt ist. Hydroxylgruppen enthaltende Polyether umfassen Oligomere des Ethylenoxids und/oder des Propylenoxids sowie Alkoxylierungsprodukte der vorgenannten Diole oder Polyole, vorzugsweise Ethoxylierungs- und Propoxylierungsprodukte mit einem Alkoxylierungsgrad von vorzugsweise 1 bis 10.

Bevorzugte Verbindungen B2 sind monofunktionelle Alkanole mit 1 bis 10 Kohlenstoffatomen, vorzugsweise 1 bis 5 Kohlenstoffatomen wie Methanol, Ethanol, n-Propanol, Isopropanol, n-Butanol, 2-Butanol, Isobutanol, tert.-Butanol, n-Pentanol, 3-Methyl-1-butanol, n-Hexanol, n-Octanol und 2-Ethylhexanol sowie ferner Cycloalkanole mit 5 bis 10 Kohlenstoffatomen, wie Cyclopentanol und Cyclohexanol sowie Cyclohexanole, die am Carbocyclus Methylgruppen aufweisen und difunktionelle Alkanole, wie 1,4-Butandiol, 1,5-Pentandiol und 1,6-Hexandiol.

In einer bevorzugten Ausführungsform der vorliegenden Erfindung umfasst die Isocyanatgruppen enthaltende Komponente A wenigstens ein trifunktionelles Isocyanat A1 und wenigstens ein difunktionelles Isocyanat A2. In diesem Falle liegt das molare Verhältnis von difunktionellem Isocyanat A2 zu trifunktionellem Isocyanat A1 (= A2:A1) vorzugsweise im Bereich von 1:10 bis 5:1, insbesondere im Bereich von 1:5 bis 2:1 und ganz besonders bevorzugt im Bereich von 1:2 bis 2:1. Bevorzugte Kombinationen A1/A2 enthalten wenigstens ein Cyanurat der vorgenannten aliphatischen Diisocyanate, insbesondere das Cyanurat des Hexamethylendiisocyanat als Verbindung A1 und ein aliphatisches oder cycloaliphatisches Diisocyanat, insbesondere Isophorondiisocyanat, als Verbindung A2. In dieser Ausführungsform gelangt man zu lagerstabilen, strahlungshärtbaren, Urethangruppen enthaltenden Prepolymeren, wenn die Komponente B wenigstens eine ethylenisch ungesättigte Verbindung B1 enthält.

In einer anderen bevorzugten Ausführungsform weist die Komponente A nur ein trifunktionelles Isocyanat A1 auf. In diesem Fall gelangt man zu lagerstabilen, strahlungshärtbaren, Urethangruppen enthaltenden Prepolymeren, wenn die Komponente B wenigstens zwei verschiedene, ethylenisch ungesättigte Verbindungen B1, die jeweils wenigstens eine reaktive OH-Gruppe aufweisen, enthält (Verbindungen B1a und B1b). Das molare Verhältnis B1a:B1b liegt dann vorzugsweise im Bereich von 1:10 bis 10:1, insbesondere im Bereich von 1:4 bis 4:1 und besonders bevorzugt im bereich von 1:2 bis 2:1. In dieser Ausführungsform enthält die Komponente B ganz besonders bevorzugt drei verschiedene Verbindungen B1, die vorzugsweise jeweils 20 bis 40 Mol-% der gesamten molaren Menge an B1 ausmachen. Erfindungsgemäß enthält in dieser Ausführungsform die Komponente A sowohl ein trifunktionelles Isocyanat A1 als auch zusätzlich ein difunktionelles Isocyanat A2.

Wenn die Komponente A wenigstens zwei verschiedene Isocyanate A1a und A1b umfasst, wird vorzugsweise kein difunktionelles Isocyanat A2 verwendet. In diesem Falle liegt das Gewichtsverhältnis von A1a zu A1b vorzugsweise im Bereich von 1:5 bis 5:1, insbesondere im Bereich von 1:3 bis 3:1 und ganz besonders bevorzugt bei 1:1.

Das erfindungsgemäße Verfahren wird in der Regel in einer Weise durchgeführt, die gewährleistet, dass die dadurch erhältlichen, Urethangruppen enthaltenden Prepolymere keine Isocyanatgruppen mehr aufweisen. Dies wird in der Regel dadurch erreicht, dass man die NCO-Gruppen der Komponente A mit einer wenigstens äquimolaren Menge an OH-Gruppen der Komponente B bis zu einem Umsetzungsgrad von 33 bis 98 % umsetzt, wobei wenigstens 0,3 mol OH-Gruppen pro Mol Isocyanatgruppen von Verbindungen B1 beigesteuert werden. Die nicht umgesetzten Isocyanatgruppen lässt man dann mit wenigstens einer Verbindung B2 abreagieren. Ein Teil der OH-Gruppen aus Komponente B kann durch primäre oder sekundäre Aminogruppen ersetzt sein. In diesem Fall bilden sich aus den Isocyanatgruppen Harnstoffgruppen. Besonders lagerstabil sind jedoch erfindungsgemäße Polymere, die im wesentlichen frei von Harnstoffgruppen sind. In diesem Fall werden die Mengenverhältnisse in Komponente A und Komponente B so gewählt, dass das Verhältnis von NCO-Gruppen zu OH-Gruppen wenigstens annähernd äquimolar ist.

In einer bevorzugten Ausführungsform liegt das molare Verhältnis der OH-Gruppen der Verbindungen B1 zu den Isocyanatgruppen der Komponente A (=OH_{B1}:NCO_{A}) im Bereich von 0,3:1 bis 1:1, insbesondere im Bereich von 0,5:1 bis 0,99:1 und ganz besonders bevorzugt im Bereich von 0,6:1 bis 0,99:1, wobei die verbleibenden NCO-Gruppen durch Umsetzung mit Verbindungen B2 zur Reaktion gebracht werden. In dieser Ausführungsform der Erfindung ist das molare Verhältnis der OH-Gruppen aus Komponente B zu den NCO-Gruppen aus Komponente A (= OH_{B}:NCO_{A}) vorzugsweise ≥ 1. In dieser Ausführungsform werden vorzugsweise zuerst die Verbindungen B1 mit der Komponente A umgesetzt und anschließend die Verbindungen B2.

Die Umsetzung der Komponente A mit der Komponente B erfolgt in einer für die Reaktion von NCO-Gruppen mit OH-Gruppen bekannten Weise. Üblicherweise wird die Reaktionstemperatur im Bereich von 0 bis 100 °C und insbesondere im Bereich von 20 bis 70 °C liegen. Vorzugsweise wird die Komponente A im Reaktionsansatz vorgelegt und die Komponente B unter Reaktionsbedingungen zugegeben. Die Dauer der Zugabe liegt vorzugsweise im Bereich von 10 Minuten bis 2 Stunden. Anschließend lässt man die Komponenten in der Regel noch einige Zeit, vorzugsweise 0,5 h bis 5 h unter Reaktionsbedingungen nachreagieren. Enthält die Komponente B wenigstens eine ethylenisch ungesättigte Verbindung B1 und wenigstens eine davon verschiedene Verbindung B2, können diese gleichzeitig oder nacheinander zu der Reaktionsmischung gegeben werden. Handelt es sich bei der Verbindung B2 um eine monofunktionelle, niedermolekulare Verbindung, dann wird diese vorzugsweise erst dann zu der Reaktionsmischung gegeben, wenn die Verbindung B1 bereits umgesetzt ist. Handelt es sich hingegen bei der Verbindung B2 um eine höhermolekulare Verbindung, beispielsweise um einen hydroxylgruppenhaltigen Polyester oder einen hydroxylgruppenhaltigen Polyether, dann wird dieser vorzugsweise zusammen mit der Komponente A in der Reaktionsmischung vorgelegt.

Zur Beschleunigung der Umsetzung können Katalysatoren, wie sie z. B. in Houben-Weil, Methoden der Organischen Chemie, Bd. XIV/2, Thieme-Verlag, Stuttgart 1963, S. 60f. sowie Ullmanns Enzyklopädie der Technischen Chemie, 4. Aufl., Bd 19 (1981), S. 306 beschrieben sind, eingesetzt werden. Bevorzugt sind zinnhaltige Katalysatoren wie Dibutylzinndilaurat, Zinn(II)octoat oder Dibutylzinndimethoxid. Im Allgemeinen werden solche Katalysatoren in einer Menge von 0,001 bis 2,5 Gew.-%, bevorzugt von 0,005 bis 1,5 Gew.-%, bezogen auf die Gesamtmenge der Komponenten A und B, eingesetzt.

Zur Stabilisierung der radikalisch polymerisierbaren Verbindungen (Verbindugen B1) werden vorzugsweise 0,001 bis 2 Gew.-%, insbesondere 0,005 bis 1,0 Gew.-% Polymerisationsinhibitoren der Reaktion zugesetzt. Dabei handelt es sich um die üblichen, zur Behinderung der radikalischen Polymerisation geeigneten Verbindungen, z. B. um Hydrochinone oder Hydrochinonmonoalkylether, 2,6-Ditert.-butylphenole, wie 2,6-Di-tert.-butylkresol, Nitrosamine, Phenothiazine oder Phosphorigsäureester.

Die Umsetzung kann sowohl lösungsmittelfrei als auch unter Zusatz von Lösungsmitteln durchgeführt werden. Als Lösungsmittel kommen inerte Lösungsmittel, z. B. Aceton, Methylethylketon, Tetrahydrofuran, Dichlormethan, Toluol, C₁-C₄-Alkylester der Essigsäure wie Ethylacetat oder Butylacetat in Frage. Bevorzugt wird die Umsetzung lösungsmittelfrei durchgeführt.

In einer bevorzugten Ausführungsform der vorliegenden Erfindung, bei der als ethylenisch ungesättigte Verbindung B1 ein Hydroxylgruppen enthaltender Ester einer α,β-ethylenisch ungesättigten Carbonsäure eingesetzt wird, beispielsweise ein Ester der Acrylsäure oder der Methacrylsäure, kann im Anschluss an die Umsetzung der Komponente A mit der Komponente B ein primäres oder sekundäres Amin zu der Reaktionsmischung gegeben werden. Vorzugsweise erfolgt die Zugabe des Amins erst dann, wenn ein Umsetzungsgrad > 98 %, insbesondere > 99 % und ganz besonders bevorzugt > 99,5 %, bezogen auf die eingesetzten Isocyanatgruppen erreicht ist. Hierdurch wird die Bildung von Harnstoffgruppen vermieden. Die primären bzw. sekundären Amine reagieren mit den α,β-ethylenisch ungesättigten Doppelbindungen im Sinne einer Michael-Reaktion unter Bildung von sekundären bzw. tertiären Aminstrukturen.

In dieser Ausführungsform der Erfindung liegt, sofern ein difunktionelles Isocyanat A2 und ein trifunktionelles Isocyanat A1 eingesetzt werden, das molare Verhältnis A2:A1 vorzugsweise im Bereich von 1:10 bis 1:2 und insbesondere im Bereich von 1:5 bis 1:1.

Geeignete Verbindungen mit primären oder sekundären Aminogruppen sind im Allgemeinen niedermolekular und weisen vorzugsweise ein Molgewicht < 1 000 auf. Vorzugsweise enthalten derartige Verbindungen eine oder zwei Aminogruppen. Beispiele für geeignete Amine umfassen primäre Monoamine, z. B. C₁-C₂₀-Alkylamine wie n-Butylamin, n-Hexylamin, 2-Ethylhexyl-1-amin, 1-Octadecylamin, Amine mit cycloaliphatischen, heterocyclischen oder (hetero)aromatischen Strukturelementen wie Benzylamin, 1-(3-Aminopropyl)imidazol und Tetrahydrofurfurylamin. Ferner sind Verbindungen mit zwei primären Aminogruppen zu nennen, z. B. C₁-C₂₀-Alkylendiamine wie Ethylendiamin, Butylendiamin, 1,5-Diamino-3-oxopentan etc. Bevorzugt sind sekundäre Amine, z. B. Di-C₁-C₂₀-alkylamine, wie Di-ethylamin, Di-n-propylamin, Di-n-butylamin, Diethanolamin, Dicyclohexylamin, Bis-2-ethylhexylamin, Diallylamin und N-Ethylethanolamin. Ebenfalls bevorzugt sind heterocyclische sekundäre Amine, in denen die NH-Gruppe im Heterocyclus sitzt, wie Pyrrolidin, Piperidin, Piperazin, N-Methylpiperazin, Morpholin und 2,2,6,6-Tetramethylpiperidin.

Die eingesetzte Menge an Amin wird vorzugsweise so gewählt, dass die Gesamtmenge der Aminogruppen des Amins 5 bis 60 mol-%, bezogen auf die gesamte eingesetzte Zahl an ethylenisch ungesättigten Doppelbindungen der Verbindung B1, ausmacht. Die Zugabe der Aminoverbindungen erfolgt vorzugsweise bei Temperaturen im Bereichvon 10 bis 100 °C.

Sofern auf die Umsetzung der Komponente A mit der Komponente B die Zugabe von Aminen folgen soll, wird die Komponente B vorzugsweise so gestaltet, dass wenigstens 90 mol-%, der in ihr enthaltenen OH-Gruppen von Verbindungen B1 herrühren. Besonders bevorzugt enthält die Komponente B in dieser Ausführungsform keine Verbindungen B2.

Das zahlenmittlere Molekulargewicht Mₙ der erfindungsgemäß erhältlichen Prepolymere ist vorzugsweise ≤ 2000 und liegt insbesondere im Bereich von 400 bis 1500. Die erfindungsgemäßen Prepolymere weisen vorzugsweise wenigstens 1,5 mol Doppelbindungen pro kg Harz und insbesondere 2 bis 6 mol Doppelbindungen pro kg Harz auf.

Die nach dem erfindungsgemäßen Verfahren erhältlichen, strahlungshärtbaren, Urethangruppen enthaltenden Prepolymere, im Folgenden als Prepolymere PU bezeichnet, können per se oder zusammen mit niedermolekularen Verbindungen, die wenigstens eine ethylenisch ungesättigte, polymerisierbare Doppelbindung enthalten (Komponente S; Reaktivverdünner) eingesetzt werden. Üblicherweise enthalten die strahlungshärtbaren Zubereitungen auf Basis der Prepolymere PU übliche Hilfsmittel wie Verdicker, Verlaufshilfsmittel, Füllstoffe bzw. Pigmente und, sofern erforderlich, Photoinitiatoren und Stabilisatoren. Ferner können die erfindungsgemäßen Prepolymere PU auch zusammen mit anderen strahlungshärtbaren Polymeren oder Oligomeren eingesetzt werden.

Werden die erfindungsgemäßen Prepolymere PU in strahlungshärtbaren Zubereitungen zum Beschichten von Substraten eingesetzt, enthalten sie üblicherweise einen Reaktivverdünner. Derartige strahlungshärtbare Zubereitungen enthalten vorzugsweise 20 bis 90 Gew.-%, insbesondere 30 bis 80 Gew.-% und besonders bevorzugt 40 bis 70 Gew.-% wenigstens eines erfindungsgemäßen Prepolymers PU und 10 bis 80 Gew.-%, insbesondere 20 bis 70 Gew.-% und besonders bevorzugt 30 bis 60 Gew.-% wenigstens eines Reaktivverdünners (Komponente S), wobei sich die Gewichtsmengen der Komponenten PU und S zu 100 % addieren.

Als Reaktivverdünner eignen sich beispielsweise vinylgruppenhaltige Monomere, insbesondere N-Vinylverbindungen, wie N-Vinylpyrrolidon, N-Vinylcaprolactam und N-Vinylformamid, weiterhin Vinylether, wie Ethyl-, Propyl-, Isopropyl-, Butyl-, Isobutyl-, tert.-Butyl-, Amyl-, 2-Ethylhexyl-, Dodecyl-, Octadecyl- und Cyclohexylvinylether, Ethylenglykolmono- und -divinylether, Di-, Tri- und Tetraethylenglykolmono- und -divinylether, Polyethylenglykoldivinylether, Ethylenglykolbutylvinylether, Triethylenglykolmethylvinylether, Polyethylenglykolmethylvinylether, Cyclohexandimethanolmono- und -divinylether, Trimethylolpropantrivinylether, Aminopropylvinylether, Diethylaminoethylvinylether und Polytetrahydrofurandivinylether, Vinylester wie Vinylacetat, -propionat, -stearat und -laurat und Vinylaromaten wie Vinyltoluol, Styrol, 2- und 4-Butylstyrol und 4-Decylstyrol sowie Acrylat-oder Methacrylatgruppen enthaltende Monomere, z. B. Hydroxyethyl(meth)acrylat, Tripropylenglykolmethylether(meth)acrylat, Cyclohexyl(meth)acrylat, 4-tert.-Butylcyclohexyl(meth)acrylat, Trimethylolpropanmonoformalacrylat, Glycerinmonoformalacrylat, 4-Tetrahydropyranylacrylat, 2-Tetrahydropyranylmethylacrylat und Tetrahydrofurfurylacrylat.

Bevorzugte Reaktivverdünner sind di- oder polyfunktionelle Ester α,β-ethylenisch ungesättigter Carbonsäuren mit aliphatischen Di-oder Polyolen. Als Di- oder Polyolkomponente kommen beispielsweise die oben genannten Di- oder Polyole, die in Zusammenhang mit Verbindung B1 genannt wurden, in Frage. Im Unterschied zu den Verbindungen B1 weisen jedoch die Reaktivverdünner vorzugsweise keine freien OH-Gruppen mehr auf. Beispiele für derartige Reaktivverdünner sind Ethylenglykoldi(meth)acrylat, Propylenglykoldi(meth)acrylat, Butylenglykoldi(meth)acrylat, 1,6-Hexandioldi(meth)acrylat, Diethylenglykoldi(meth)acrylat, Triethylenglykoldi(meth)acrylat, Dipropylenglykoldi(meth)acrylat, Tripropylenglykoldi(meth)acrylat, 1,4-Cyclohexandioldi(meth)acrylat und 1,4-Bis(hydroxymethyl)cyclohexandi(meth)acrylat, ferner Trimethylolethantri(meth)acrylat, Trimethylolpropantri(meth)acrylat und Pentaerythrittetra(meth)acrylat. Bevorzugt sind auch die Ester ethoxilierter Polyole, z. B. das Triacrylat oder das Trimethacrylat von ethoxiliertem Trimethylolpropan.

Ferner können die erfindungsgemäßen, strahlungshärtbaren Zubereitungen je nach Verwendungszweck bis zu 20 Gew.-%, bezogen auf das Gesamtgewicht der Zubereitung, übliche Hilfsmittel wie Verdicker, Verlaufshilfsmittel, Entschäumer, UV-Stabilisatoren, Gleitmittel und Füllstoffe enthalten. Geeignete Hilfsmittel sind dem Fachmann hinreichend aus der Lack-Beschichtungs-Technologie bekannt. Geeignete Füllstoffe umfassen Silikate, z. B. durch Hydrolyse von Siliciumtetrachlorid erhältliche Silikate wie Ärosil® der Fa. Degussa, Kieselerde, Talkum, Aluminiumsilikate, Magnesiumsilikate, Calciumcarbonate etc. Geeignete Stabilisatoren umfassen typische UV-Absorber wie Oxanilide, Triazine und Benzotriazol (letztere erhältlich als Tinuvin®-Marken der Ciba-Spezialitätenchemie) und Benzophenone. Diese können alleine oder zusammen mit geeigneten Radikalfängern, beispielsweise sterisch gehinderten Aminen wie 2,2,6,6-Tetramethylpiperidin, 2,6-Di-tert.-butylpiperidin oder deren Derivate, z. B. Bis-(2,2,6,6-tetramethyl-4-piperidyl)sebacinat, eingesetzt werden. Stabilisatoren werden üblicherweise in Mengen von 0,1 bis 5,0 Gew.-% bezogen auf die in der Zubereitung enthaltenen Komponenten PU und S eingesetzt.

Sofern die Aushärtung mittels UV-Strahlung erfolgt, enthalten die erfindungsgemäßen Zubereitungen wenigstens einen Photoinitiator, der die Polymerisation ethylenisch ungesättigter Doppelbindungen initiieren kann. Hierzu zählen Benzophenon und Benzophenonderivate, wie 4-Phenylbenzophenon und 4-Chlorobenzophenon, Michlers Keton, Anthron, Acetophenonderivate, wie 1-Benzoylcyclohexan-1-ol, 2-Hydroxy-2,2-dimethylacetophenon und 2,2-Dimethoxy-2-phenylacetophenon, Benzoin und Benzoinether, wie methyl-, Ethyl- und Butylbenzoinether, Benzilketale, wie Benzildimethylketal, 2-Methyl-1-[4-(methylthio)phenyl]-2-morpholinopropan-1-on, Anthrachinon und seine Derivate wie β-Methylanthrachinon und tert.-Butylanthrachinon, Acylphosphinoxide, wie 2,4,6-Trimethylbenzoyldiphenylphosphinoxid, Ethyl-2,4,6-trimethylbenzoylphenylphosphinat und Bisacylphosphinoxide. Die vorgenannten Photoinitiatoren werden, sofern erforderlich, in Mengen von 0,05 bis 20 Gew.-%, vorzugsweise 0,1 bis 10 Gew.-% und insbesondere 0,2 bis 5 Gew.-%, bezogen auf die polymerisierbaren Komponenten A, B und C der erfindungsgemäßen Zubereitungen eingesetzt. Sofern die erfindungsgemäße Zubereitung mittels Elektronenstrahlung gehärtet wird, kann auf Photoinitiatoren verzichtet werden. Bei Anwendung der Elektronenstrahlhärtung können die erfindungsgemäßen Zubereitungen auch farbige Pigmente enthalten.

Vorzugsweise enthalten die erfindungsgemäßen Zubereitungen keine Pigmente oder Füllstoffe. Ferner sind die erfindungsgemäßen Zubereitungen vorzugsweise frei von nicht-polymerisierbaren inerten Lösungsmitteln.

Die erfindungsgemäßen strahlungshärtbaren, Urethangruppen enthaltenden Prepolymere und ihre Zubereitungen zeichnen sich durch eine sehr gute Lagerstabilität, insbesondere bei Temperaturen von unter 10 °C, aus. Die gute Lagerstabilität äußert sich beispielsweise durch eine geringe Neigung zur Kristallisation oder Gelbildung oder zur Thixotropie. Die Zubereitungen auf der Basis der erfindungsgemäßen Urethangruppen enthaltenden Prepolymere zeichnen sich zudem durch eine vergleichsweise niedrige Viskosität < 10 Pas (bestimmt bei 23 °C mittels eines ICI Kegel-Platte Viskosimeters) aus. Hierbei ist bemerkenswert, dass die positiven Eigenschaften nicht zu Lasten der mechanischen Eigenschaften von Beschichtungen auf Basis der erfinungsgemäßen Prepolymere gehen. So weisen derartige Beschichtungen in der Regel eine hohe Härte, charakterisiert durch Werte für die Pendeldämpfung (analog DIN 53157) > 50 sec auf. Häufig weisen die Beschichtungen darüber hinaus auch eine hohe Flexibilität, charakterisiert durch Werte für die Erichsen-Tiefung (analog DIN 53156) > 3 mm auf.

Die erfindungsgemäßen Zubereitungen erweisen sich besonders geeignet zum Beschichten von Substraten wie Holz, Papier, Kunststoffoberflächen, mineralischen Baustoffen wie Zement-Formsteine und Faserzementplatten, und insbesondere von Metallen oder beschichteten Metallen.

Demnach betrifft die vorliegende Erfindung auch ein Verfahren zum Beschichten von Substraten, insbesondere von Metallen oder beschichteten Metallen, sowie die durch dieses Verfahren erhältlichen beschichteten Substrate. Die Beschichtung der Substrate erfolgt in der Regel dadurch, dass man wenigstens eine erfindungsgemäße, strahlungshärtbare Zubereitung auf das zu beschichtende Substrat in der gewünschten Stärke aufbringt, gegebenenfalls vorhandenes Lösungsmittel entfernt und anschließend durch Einwirkung energiereicher Strahlung wie UV-Strahlung oder Elektronenstrahlung aushärtet. Dieser Vorgang kann, sofern gewünscht, ein- oder mehrfach wiederholt werden. Das Aufbringen der strahlungshärtbaren Zubereitungen auf das Substrat erfolgt in bekannter Weise, z. B. durch Spritzen, Spachteln, Rakeln, Bürsten, Rollen oder Gießen. Die Beschichtungsstärke liegt in der Regel im Bereich von 3 bis 500 g/m² und vorzugsweise 10 bis 200 g/m² entsprechend Nassfilmdicken von etwa 3 bis 500 µm, vorzugsweise 10 bis 200 µm. Das Aufbringen kann sowohl bei Raumtemperatur als auch bei erhöhter Temperatur, vorzugsweise jedoch nicht oberhalb 100 °C erfolgen.

Anschließend werden die Beschichtungen durch Einwirkung der energiereichen Strahlung, vorzugsweise UV-Strahlung der Wellenlänge 250 bis 400 nm oder durch Bestrahlung mit energiereichen Elektronen (Elektronenstrahlung; 150 bis 300 keV) gehärtet. Als UV-Quellen dienen beispielsweise Hochdruckquecksilberdampflampen, z. B. CK- oder CK1-Strahler der Fa. IST. Die üblicherweise zur Vernetzung ausreichende Strahlungsdosis bei UV-Härtung liegt im Bereich von 80 bis 3000 mJ/cm².

In einem bevorzugten Verfahren erfolgt die Aushärtung kontinuierlich, indem man das mit der erfindungsgemäßen Zubereitung behandelte Substrat mit konstanter Geschwindigkeit an einer Strahlungsquelle vorbeiführt. Hierfür ist es erforderlich, dass die Aushärtungsgeschwindigkeit der erfindungsgemäßen Zubereitung ausreichend hoch ist.

Im folgenden wird die vorliegende Erfindung anhand einiger Beispiele erläutert.

### I) Bestimmung der anwendungstechnischen Eigenschaften Pendeldämpfung, Erichsen-Tiefung, Viskosität, Reaktivität und Lagerstabilität

Die Bestimmung der Pendeldämpfung erfolgte analog DIN 53157. Hierzu wurden die strahlungshärtbaren Prepolymere bzw. strahlungshärtbaren Zusammensetzungen mit einer Nassfilmdicke von 100 µm auf Glas aufgebracht. Die so erhaltene Probe wurde zur Aushärtung mit einer Bandgeschwindigkeit von 50 m/min in einem Abstand von 10 cm an einer Quecksilberdampflampe (80 W/cm) vorbeigeführt.

Die Ermittlung der Erichsen-Tiefung erfolgte analog DIN 53156. Hierzu wurde mittels eines Spiralrakels die jeweilige erfindungsgemäße Zubereitung mit einer Nassfilmdicke von 50 µm auf BONDER-Blech 132 aufgebracht. Zur Aushärtung wurde in der oben beschriebenen Weise mit einer Quecksilberdampflampe belichtet. Anschließend wurde die Erichsen-Tiefung durch Eindrücken einer Metallkugel in die nichtbeschichtete Seite des Blechs bestimmt.

Bestimmung der Viskosität erfolgte bei 23 °C mittels eines ICI Kegel-Platte Viskosimeters.

### Bestimmung der Lagerstabilität

Zur Untersuchung der Lagerstabilität wurden Proben der erfindungsgemäßen Prepolymere bzw ihrer strahlungshärtbaren Zubereitungen, die noch keine Hilfsmittel enthielten, in Küvetten mit 1 cm Schichtdicke bei 0 °C bzw. 8 °C aufbewahrt und die Trübung der Proben verfolgt. Als Lagerstabilität wird der Tag angegeben, an dem die Probe erste Trübungserscheinungen zeigt.

### II. Herstellung der erfindungsgemäßen Prepolymere Beispiele 1 bis 8, Vergleichsbeispiele 1 bis 5

### Beispiel 1:

203,7 Gewichtsteile Isocyanurat des Hexamethylendiisocyanats und 29,95 Teile Isophorondiisocyanat wurden zusammen mit 0,46 Gewichtsteilen 2,6-Bis-tert.-butyl-p-kresol und 0,23 Gewichtsteilen Hydrochinonmonomethylether auf 60 °C erwärmt. Hierzu gab man 0,1 Gewichtsteile Dibutylzinndilaurat und ließ innerhalb 20 Minuten unter Rühren und Kühlung 151,4 Gewichtsteile Hydroxyethylacrylat so zutropfen, dass die Temperatur nicht über 75 °C anstieg. Anschließend ließ man etwa 4 Stunden bei 70 bis 75 °C nachreagieren, bis der Isocyanatgehalt* der Mischung 0,28 % betrug. Man kühlte auf 55 °C ab und gab dann innerhalb 15 Minuten unter Kühlung 77,5 Gewichtsteile Di-n-butylamin zu. Anschließend ließ man weitere 2,5 Stunden bei 70 bis 75 °C nachreagieren und gab dann 463,3 Gewichtsteile Triacrylat von ethoxiliertem Trimethylolpropan (Ethoxilierungsgrad 3,0) zu und behielt die Temperatur von 70 bis 75 °C weitere 2 Stunden bei. Anschließend filtrierte man über einen Filter mit einer Maschenweite von 80 µm. Die Viskosität der so erhaltenen Zubereitung betrug 6,2 Pas. Eine bei 0 °C aufbewahrte Probe war nach 100 Tagen noch völlig klar.
* Der Isocyanatgehalt wurde durch Umsetzung einer definierten Menge der Reaktionsmischung mit einem Überschuss an n-Butylamin und Rücktitration des Überschusses mit 0,1 N Salzsäure bestimmt.

### Beispiel 2:

Die Herstellung erfolgte analog Beispiel 1, jedoch wurden anstelle von 77,5 Gewichtsteilen Di-n-butylamin 34,9 Gewichtsteile Morpholin eingesetzt. Die Viskosität der Zubereitung lag bei 5,2 Pas. Eine Probe der Zubereitung war nach 100 Tagen bei 0 °C noch völlig klar.

### Vergleichsbeispiel 1:

252,7 Gewichtsteile Isocyanurat des Hexamethylendiisocyanats wurden zusammen mit 0,1 Gewichtsteilen Dibutylzinndilaurat, 0,46 Gewichtsteilen 2,6-Bis-tert.-butyl-p-kresol und 0,23 Gewichtsteilen Hydrochinonmonomethylether unter Rühren auf 60 °C erwärmt. Hierzuließ man innerhalb 20 Minuten 151,4 Gewichtsteilen Hydroxyethylacrylat zutropfen, wobei die Temperatur auf 70 °C anstieg. Man behielt diese Temperatur weitere 4 Stunden bei. Danach lag der Isocyanatgehalt bei 0,08 mol-%. Anschließend gab man innerhalb 15 Minuten 77,5 Gewichtsteile Di-n-butylamin zu, wobei die Temperatur auf 73 °C anstieg. Man behielt diese Temperatur 2,5 Stunden bei und gab anschließend 463,3 Gewichtsteile Triacrylat von ethoxiliertem Trimethylolpropan (Ethoxilierungsgrad 3.0) zu. Anschließend wurde wie in Beispiel 1 beschrieben filtriert. Die erhaltene Zubereitung wies eine Viskosität von 4,96 Pas auf.

Eine bei 0 °C aufbewahrte Probe dieser Zubereitung zeigte nach 8 Tagen bereits leichte Trübungserscheinung und war nach 13 Tagen undurchsichtig.

### Beispiel 3:

282,9 Gewichtsteile Isocyanurat des Hexamethylendiisocyanats und 166,7 Gewichtsteile Isophorondiisocyanat wurden zusammen mit 0,75 Gewichtsteilen 2,6-Bis-tert.-butyl-p-kresol und 0,37 Gewichtsteilen Hydrochinonmonomethylether auf 60 °C erwärmt. Anschließend gab man 0,15 Gewichtsteile Dibutylzinndilaurat zu und ließ innerhalb 20 Minuten unter Rühren und Kühlung 295,8 Gewichtsteile Hydroxyethylacrylat so zutropfen, dass die Temperatur nicht über 75 °C anstieg. Die Temperatur von 70 bis 75 °C wurde 4 Stunden lang beibehalten bis der Isocyanatgehalt bei 2,29 mol-% lag. Anschließend gab man 15,1 Gewichtsteile Methanol zu und ließ weitere 2,5 Stunden bei 70 bis 75 °C nachreagieren. Dann gab man 320 Gewichtsteile Hexandioldiacrylat zu und behielt die Temperatur von 70 bis 75 °C weitere 2 Stunden bei. Anschließend filtrierte man über einen Filter mit einer Maschenweite von 80 µm. Die erhaltene Zubereitung wies eine Viskosität von 3,5 Pas auf. Eine bei 8 °C aufbewahrte Probe war nach 105 Tagen noch vollständig klar.

### Beispiel 4:

Die Herstellung der Zubereitung erfolgte analog Beispiel 3, jedoch betrugen die Einsatzmengen an Isocyanat 396,1 Gewichtsteile Isocyanurat des Hexamethylendiisocyanats und 100 Gewichtsteile Isophorondiisocyanat. Die Viskosität der Probe lag bei 3,9 Pas. Eine bei 8 °C aufbewahrte Probe zeigte nach 14 Tagen eine Eintrübung.

### Vergleichsbeispiel 2:

Die Herstellung erfolgte analog Beispiel 3, jedoch wurden als Isocyanatkomponente ausschließlich 814 Gewichtsteile Isocyanurat des Hexamethylendiisocyanats, 418 Gewichtsteile 2-Hydroxyethylacrylat und 541 Gewichtsteile Hexandioldiacrylat eingesetzt. Man erhielt eine Probe mit einer Viskosität von 4,0 Pas. Eine bei 8 °C aufbewahrte Probe war nach 2 Tagen bereits angeliert und nach 3 Tagen trüb.

### Vergleichsbeispiel 3:

222,3 Gewichtsteile Isophorondiisocyanat, 0,46 Gewichtsteile 2,6-Bis-tert.-butyl-p-kresol und 0,23 Gewichtsteile Hydrochinonmonomethylether wurden zusammen auf 60 °C erwärmt. Anschließend gab man 0,1 Gewichtsteile Dibutylzinndilaurat zu und ließ innerhalb 30 Minuten unter Rühren und Kühlung 232,3 Gewichtsteile Hydroxyethylacrylat so zutropfen, dass die Temperatur nicht über 75 °C anstieg. Man behielt die Temperatur von 70 bis 75 °C 5 Stunden bei. Hiernach lag der Isocyanatgehalt bei 0,13 Mol-%. Anschließend gab man 0,5 Gewichtsteile Methanol zu und ließ weitere 3 Stunden bei 70 bis 75 °C nachreagieren. Anschließend gab man 195 Gewichtsteile Hexandioldiacrylat zu und behielt die Temperatur von 70 bis 75 °C weitere 3 Stunden bei. Anschließend filtrierte man über einen Filter mit einer Maschenweite von 80 µm. Das erhaltene Produkt wies eine Viskosität von 1,6 Pas auf. Eine bei 8 °C aufbewahrte Probe war nach 4 Tagen vollständig trüb.

### Beispiel 5

200 Gewichtsteile Isocyanurat des Hexamethylendiisocyanats, 0,31 Gewichtsteile 2,6-Bis-tert.-butyl-p-kresol und 0,16 Gewichtsteile Hydrochinonmonomethylether wurden auf 50 °C erwärmt. Hierzu gab man 0,06 Gewichtsteile Dibutylzinndilaurat und ließ innerhalb 20 Minuten unter Rühren und Kühlung eine Mischung aus 33 Gewichtsteilen Hydroxyethylacrylat, 33 Gewichtsteilen Hydroxypropylacrylat und 33 Gewichtsteilen Hydroxybutylacrylat in einer Weise zutropfen, dass die Temperatur nicht über 75 °C anstieg. Man ließ 4 Stunden bei 70 bis 75 °C nachreagieren. Hiernach lag der Isocyanatgehalt bei 3,7 Mol-%. Anschließend kühlte man auf 55 °C ab, gab dann innerhalb 15 Minuten unter Kühlung 10 Gewichtsteile Methanol zu und ließ eine weitere Stunde bei 60 °C nachreagieren. Anschließend gab man 133 Gewichtsteile Hexandioldiacrylat zu und behielt die Temperatur von 60 °C eine weitere Stunde bei. Nach Filtration über einen Filter mit einer Maschenweite von 80 µm erhielt man ein Produkt mit einer Viskosität von 3 Pas.

Eine bei 0 °C aufbewahrte Probe war nach 100 Tagen noch völlig klar.

Zur Ermittlung der Beschichtungsqualität der erfindungsgemäßen Zubereitungen wurden je 100 Gewichtsteile der Zubereitungen aus den Beispielen 1 bis 5 und den Vergleichsbeispielen 1 bis 3 mit 3 Teilen 2-Hydroxy-2-methyl-1-phenylpropan-1-on (Darocure® 1173 der Fa. Ciba-Spezialitätenchemie) abgemischt. Für die so erhaltenen Zubereitungen wurden Pendeldämpfung und Erichsen-Tiefung in der oben beschriebenen Weise ermittelt. Die Ergebnisse sind in Tabelle 1 zusammen mit den Werten für die Lagerstabilität aufgeführt.

**Tabelle 1**

| Beispiel | Lagerstabilität (d) | Pendeldämpfung (sec) | Erichsen-Tiefung (mm) |
|---|---|---|---|
| 1 | > 100 | 56 | 6,3 |
| V1 | 8 | 59 | 7,1 |
| 2 | > 100 | 120 | 4,8 |
| 3 | > 105 | 185 | 3,5 |
| 4 | 14 | 181 | 3,6 |
| V2 | 3 | 175 | 3,0 |
| V3 | 4 | 188 | 3,6 |
| 6 | > 100 | 150 | 1,8 |

### Vergleichsbeispiel 4:

Man erhitzt 1500 Teile Isocyanurat des Hexamethylendiisocyanats, 2,26 Teile 2,6-Di-tert.-butyl-p-kresol und 1,13 Teile Hydrochinon-mono-methylether auf 60 °C, gibt 0,24 Teile Dibutyl-zinn-dilaurat zu und tropft während 20 Minuten unter Rühren und Kühlung 683 Teile Hydroxyethylacrylat zu, so dass die Temperatur nicht über 75 °C steigt. Nach 4-stündiger Reaktion bei 70 bis 75 °C betrug der Isocyanatgehalt 2,4 %. Man lässt das Reaktionsprodukt auf 55 °C abkühlen, gibt dann innerhalb 15 Minuten unter intensiver Kühlung 75 Teile Methanol zu und lässt weitere 2,5 Stunden bei 70 bis 75 °C nachreagieren. Dann gibt man 973 Teile Hexandioldiacrylat zu und lässt weitere 2 Stunden bei 70 bis 75 °C reagieren. Nach Filtration über einen 80 µm Filter, erhält man ein Produkt mit einer Viskosität von 3,4 Pas.

Das Produkt wird in einem Kühlschrank bei einer Temperatur von 0 °C aufbewahrt, und die Trübung der Probe wird verfolgt. Nach 10 Tagen ist die Probe angeliert und nach 14 Tagen trüb und fest.

### Vergleichsbeispiel 5:

Man erhitzt 1970 Teile Biuret des Hexamethylendiisocyanats, 3 Teile 2,6-Di-tert.-butyl-p-kresol und 1,5 Teile Hydrochinon-mono-methylether auf 60 °C, gibt 0,6 Teile Dibutyl-zinn-laurat zu und tropft während 20 Minuten unter Rühren und Kühlung 894,5 Teile Hydroxyethylacrylat zu, so dass die Temperatur nicht über 75 °C steigt. Nach 4-stündiger Reaktion bei 70 bis 75 °C betrug der Isocyanatgehalt 3,8 %. Man lässt das Reaktionsprodukt auf 55 °C abkühlen, gibt dann innerhalb 15 Minuten unter intensiver Kühlung 98,7 Teile Methanol zu und lässt weitere 2,5 Stunden bei 70 bis 75 °C nachreagieren. Dann gibt man 1276 Teile Hexandioldiacrylat zu und lässt weitere 2 Stunden bei 70 bis 75 °C reagieren. Nach Filtration über ein 80 µm Filter erhält man ein Produkt mit einer Viskosität von 3,5 Pas.

Das Produkt wird in einem Kühlschrank bei einer Temperatur von 0 °C aufbewahrt, und die Trübung der Probe wird verfolgt. Nach 4 Tagen trübt die Probe ein, bleibt allerdings noch fließfähig.

### Beispiel 6:

Aus 10 Teilen des Vergleichsbeispiels 4 und 10 Teilen des Vergleichsbeispiels 5 wird eine klare Mischung hergestellt.

Diese Mischung wird in einem Kühlschrank bei einer Temperatur von 0 °C aufbewahrt, und die Trübung der Probe wird verfolgt. Nach 130 Tagen ist die Probe noch klar und fließfähig, während die Proben der Vergleichsbeispiele 4 und 5 eingetrübt sind.

### Beispiel 7:

Man erhitzt 267 Teile Isocyanurat des Hexamethylendiisocyanats, 533 Teile Biuret des Hexamethylendiisocyanats, 2,26 Teile 2,6-Ditert.-butyl-p-kresol und 1,13 Teile Hydrochinon-mono-methylether auf 60 °C, gibt 0,24 Teile Dibutyl-zinn-laurat zu und tropft während 20 Minuten unter Rühren und Kühlung 683 Teile Hydroxyethylacrylat zu, so dass die Temperatur nicht über 75 °C steigt. Nach 4-stündiger Reaktion bei 70 bis 75 °C betrug der Isocyanatgehalt 2,4 %. Man lässt das Reaktionsprodukt auf 55 °C abkühlen, gibt dann innerhalb 15 Minuten unter intensiver Kühlung 75 Teile Methanol zu und lässt weitere 2,5 Stunden bei 70 bis 75 °C nachreagieren. Dann gibt man 973 Teile Hexandioldiacrylat zu und lässt weitere 2 Stunden bei 70 bis 75 °C reagieren. Nach Filtration über ein 80 µm Filter erhält man ein Produkt mit einer Viskosität von 3,4 Pas.

Das Produkt wird in einem Kühlschrank bei einer Temperatur von 0 °C aufbewahrt, und die Trübung der Probe wird verfolgt. Nach 130 Tagen ist die Probe noch fließfähig und zeigt nur einen leichten Schleier.

### Beispiel 8:

Man erhitzt 50 Teile Isocyanurat des Hexamethylendiisocyanats, 50 Teile Biuret des Hexamethylendiisocyanats, 0,14 Teile 2,6-Ditert.-butyl-p-kresol und 0,07 Teile Hydrochinon-mono-methylether auf 60 °C, gibt 0,1 Teile Dibutyl-zinn-laurat zu und tropft während 20 Minuten unter Rühren und Kühlung 49,5 Teile Hydroxyethylacrylat zu, so dass die Temperatur nicht über 75 °C steigt. Nach 4-stündiger Reaktion bei 70 bis 75 °C betrug der Isocyanatgehalt 1,7 %. Man lässt das Reaktionsprodukt auf 55 °C abkühlen, gibt dann innerhalb 15 Minuten unter intensiver Kühlung 7 Teile Methanol zu und lässt weitere 2,5 Stunden bei 70 bis 75 °C nachreagieren. Dann gibt man 62 Teile Hexandioldiacrylat zu und lässt weitere 2 Stunden bei 70 bis 75 °C reagieren. Nach Filtration über ein 80 µm Filter erhält man ein Produkt mit einer Viskosität von 3,6 Pas.

Das Produkt wird in einem Kühlschrank bei einer Temperatur von 0 °C aufbewahrt, und die Trübung der Probe wird verfolgt. Nach 130 Tagen ist die Probe noch klar und fließfähig.

### Beispiel 9:

In einem Reaktionskolben werden 20 Teile Hydroxyethylacrylat, 28,6 Teile Hexandioldiacrylat, 0,68 teile Hexandiol, 0,07 Teile 2,6-Di-tert.-butyl-p-kresol, 0,03 Teile Hydrochinon-mono-methylether und 0,01 Teile Dibutyl-zinn-dilaurat vorgelegt und anschließend 22 Teile Isocyanurat des Hexamethylendiisocyanats und 22 Teile Biuret des Hexamethylendiisocyanats während 75 Minuten unter Rühren und Kühlen so zugetropft, dass die Temperatur nicht über 75 °C steigt. Nach 4-stündiger Reaktion bei 70 bis 75 °C betrug der Isocyanatgehalt 1,6 %. Man lässt das Reaktionsprodukt auf 60 °C abkühlen, gibt dann innerhalb von 15 Minuten unter intensiver Kühlung 1,8 Teile Methanol zu und lässt weitere 2,5 Stunden bei 70 bis 75 °C nachreagieren. Dann gibt man 62 Teile Hexandioldiacrylat zu und lässt weitere 2 Stunden bei 70 bis 75 °C reagieren. Nach Filtration über ein 80 µm Filter erhält man ein Produkt mit einer Viskosität von 5,1 Pas.

Das Produkt wird in einem Kühlschrank bei einer Temperatur von 0 °C aufbewahrt, und die Trübung der Probe wird verfolgt. Nach 150 Tagen ist die Probe noch klar und fließfähig.

## Patentansprüche

1. Verfahren zur Herstellung von strahlungshärtbaren, Urethangruppen enthaltenden Prepolymeren PU durch Umsetzung einer Isocyanatgruppen enthaltenden Komponente A mit einer OB-Gruppen enthaltenden Komponente B, **dadurch gekennzeichnet, dass** die Komponente A wenigstens eine trifunktionelle Isocyanatverbindung A1 und gegebenenfalls eine oder mehrere difunktionelle Isocyanatverbindungen A2 umfasst und die OH-Gruppen enthaltende Komponente B wenigstens eine ethylenisch ungesättigte Verbindung B1 mit wenigstens einer reaktiven OH-Gruppe und gegebenenfalls davon verschiedene OH-Gruppen enthaltende Verbindungen B2 umfasst, wobei die Komponente A wenigstens zwei verschiedene Isocyanatverbindungen A1 oder wenigstens eine Isocyanatverbindung A1 und wenigstens eine Isocyanatverbindung A2 umfasst.

2. Verfahren nach Anspruch 1, **dadurch gekennzeichnet, dass** die Komponente B wenigstens zwei verschiedene Verbindungen B1 umfasst, wenn die Komponente A keine difunktionelle Isocyanatverbindung A2 enthält.

3. Verfahren nach Anspruch 1, **dadurch gekennzeichnet, dass** die Komponente A ein Gemisch aus wenigstens zwei verschiedenen Isocyanatverbindungen A1a und A1b und gegebenenfalls wenigstens eine Isocyanatverbindung A2 umfasst.

4. Verfahren nach Anspruch 1, **dadurch gekennzeichnet, dass** die Verbindung A1 ausgewählt ist unter den Biurethen und Isocyanuraten von organischen Diisocyanaten mit 4 bis 22 C-Atomen sowie den Addukten besagter Diisocyanate an trifunktionelle aliphatische Alkohole.

5. Verfahren nach Anspruch 2, **dadurch gekennzeichnet, dass** die Verbindung A1 ausgewählt ist unter dem Isocyanurat und Biuret des Hexamethylendiisocyanats oder Isophorondiisocyanats.

6. Verfahren nach Anspruch 3, **dadurch gekennzeichnet, dass** das Gewichtsverhältnis von Isocyanatverbindung A1a zu Isocyanatverbindung A1b im Bereich von 1:5 bis 5:1 liegt.

7. Verfahren nach Anspruch 1, **dadurch gekennzeichnet, dass** die Komponente A ein Diisocyanat A2 und ein Triisocyanat A1 in einem molaren Verhältnis von A2:A1 im Bereich von 5:1 bis 1:10 enthält.

8. Verfahren nach Anspruch 1, **dadurch gekennzeichnet, dass** die Verbindung B1 ein Ester der Acrylsäure oder der Methacrylsäure mit einem aliphatischen Di- oder Polyol ist, wobei der Ester noch wenigstens eine freie OH-Gruppe aufweist.

9. Verfahren nach Anspruch 8, **dadurch gekennzeichnet, dass** die Verbindung B1 ausgewählt ist unter 2-Hydroxyethyl(meth)acrylat, Hydroxypropyl(meth)acrylat, 1,4-Butandiol(meth)acrylat, Trimethylolpropanmono- und di(meth)acrylat und Pentaerythrittri(meth)acrylat.

10. Verfahren nach Anspruch 8, **dadurch gekennzeichnet, dass** die Komponente B wenigstens zwei verschiedene Verbindungen B1a und B1b mit einem molaren Verhältnis B1a:B1b im Bereich von 1:10 bis 10:1 enthält.

11. Strahlungshärtbare, Urethangruppen enthaltende Prepolymere PU, erhältlich nach einem Verfahren gemäß Anspruch 1.

12. Strahlungshärtbare Zubereitung, enthaltend wenigstens ein Prepolymer PU nach Anspruch 11 sowie gegebenenfalls übliche Hilfsmittel.

13. Strahlungshärtbare Zubereitung nach Anspruch 12, enthaltend
i) 20 bis 90 Gew.-% wenigstens eines Prepolymers PU nach Anspruch 11 (Komponente PU),
ii) 10 bis 80 Gew.-% wenigstens einer niedermolekularen Verbindung, die wenigstens eine ethylenisch ungesättigte, polymerisierbare Doppelbindung enthält (Komponente S) und
iii) bis zu 20 Gew.-%, bezogen auf das Gesamtgewicht der Komponenten PU und S, übliche Hilfsmittel,
mit der Maßgabe, dass sich die Gewichtsmengen der Komponenten PU und S zu 100 Gew.-% addieren.

14. Verwendung von Prepolymeren PU nach Anspruch 11 oder den strahlungshärtbaren Zubereitungen nach Anspruch 12 oder 13 zum Beschichten von Substraten.

15. Verwendung nach Anspruch 14, wobei das Substrat ein Metall oder ein beschichtetes Metall ist.

16. Verfahren zum Beschichten von Substraten, **dadurch gekennzeichnet, dass** man ein Prepolymer PU nach Anspruch 11 oder eine strahlungshärtbare Zubereitung nach Anspruch 12 oder 13 auf das zu beschichtende Substrat aufbringt, gegebenenfalls vorhandenes Lösungsmittel entfernt und anschließend durch Bestrahlung mit UV- oder Elektronenstrahlung härtet.

17. Beschichtetes Substrat erhältlich durch ein Verfahren nach Anspruch 16.

## Claims

1. A process for preparing radiation-curable, urethane-functional prepolymers PU by reacting an isocyanate-functional component A with an OH-containing component B, wherein the component A comprises at least one trifunctional isocyanate compound A1 with or without one or more difunctional isocyanate compounds A2 and the OH-containing component B comprises at least one ethylenically unsaturated compound B1 having at least one reactive OH group with or without different OH-containing compounds B2, where either component A comprises at least two different isocyanate compounds A1 or at least one isocyanate compound A1 and at least one isocyanate compound A2.

2. A process as claimed in claim 1, wherein component B comprises at least two different compounds B1 if component A contains no difunctional isocyanate compound A2.

3. A process as claimed in claim 1, wherein component A comprises a mixture of at least two different isocyanate compounds A1a and A1b and, if desired, at least one isocyanate compound A2.

4. A process as claimed in claim 1, wherein the compound A1 is selected from the biurets and isocyanurates of organic diisocyanates having 4 to 22 carbons and from the adducts of said diisocyanates with trifunctional aliphatic alcohols.

5. A process as claimed in claim 2, wherein the compound A1 is selected from the isocyanurate and biuret of hexamethylene diisocyanate or isophorone diisocyanate.

6. A process as claimed in claim 3, wherein the weight ratio of isocyanate compound A1a to isocyanate compound A1b is within the range from 1:5 to 5:1.

7. A process as claimed in claim 1, wherein the component A comprises a diisocyanate A2 and a triisocyanate A1 in a molar ratio A2:A1 in the range from 5:1 to 1:10.

8. A process as claimed in claim 1, wherein the compound B1 is an ester of acrylic or methacrylic acid with an aliphatic di-or polyol, the ester still having at least one free OH group.

9. A process as claimed in claim 8, wherein the compound B1 is selected from 2-hydroxyethyl (meth)acrylate, hydroxypropyl (meth)acrylate, 1,4-butanediol (meth)acrylate, trimethylolpropane mono- and di(meth)acrylate and pentaerythritol tri(meth)acrylate.

10. A process as claimed in claim 8, wherein the component B comprises at least two different compounds B1a and B1b with a molar ratio B1a:B1b in the range from 1:10 to 10:1.

11. A radiation-curable, urethane-functional prepolymer PU obtainable by a process as claimed in claim 1.

12. A radiation-curable formulation comprising at least one prepolymer PU as claimed in claim 11 with or without customary auxiliaries.

13. A radiation-curable formulation as claimed in claim 12, comprising
i) from 20 to 90 % by weight of at least one prepolymer PU as claimed in claim 11 (component PU),
ii) from 10 to 80 % by weight of at least one low molecular mass compound containing at least one ethylenically unsaturated, polymerizable double bond (component S), and
iii)of up to 20 % by weight, based on the overall weight of components PU and S, of customary auxiliaries,
with the proviso that the amounts by weight of component PU and S add up to 100 % by weight.

14. The use of a prepolymer PU as claimed in claim 11 or of a radiation-curable formulation as claimed in claim 12 or 13 for coating a substrate.

15. The use as claimed in claim 14, where the substrate is a metal or a coated metal.

16. A method of coating a substrate, which comprises applying a prepolymer PU as claimed in claim 11 or a radiation-curable formulation as claimed in claim 12 or 13 to the substrate which is to be coated, removing any solvent and then carrying out curing by irradiation with UV or electron beams.

17. A coated substrated obtainable by a method as claimed in claim 16.

## Revendications

1. Procédé de préparation de prépolymères PU contenant des groupes uréthanne, durcissables sous un rayonnement, par réaction d'un composant A contenant des groupes isocyanate avec un composant B contenant des groupes OH, **caractérisé en ce que** le composant A comporte au moins un composé isocyanate trifonctionnel A1 et éventuellement un ou plusieurs composés isocyanate difonctionnels A2 et **en ce que** le composant B contenant des groupes OH comporte au moins un composé éthyléniquement insaturé B1 présentant au moins un groupe OH réactif et éventuellement des composés B2 contenant des groupes OH, différents de ceux-là, le composant A comportant au moins deux composés isocyanate différents A1 ou au moins un composé isocyanate A1 et au moins un composé isocyanate A2.

2. Procédé suivant la revendication 1, **caractérisé en ce que** le composant B comporte au moins deux composés différents B1 lorsque le composant A ne contient pas de composé isocyanate difonctionnel A2.

3. Procédé suivant la revendication 1, **caractérisé en ce que** le composant A comporte un mélange d'au moins deux composés isocyanate différents A1a et A1b et éventuellement au moins un composé isocyanate A2.

4. Procédé suivant la revendication 1, **caractérisé en ce que** le composé A1 est choisi parmi les biurets et isocyanurates de diisocyanates organiques présentant 4 à 22 atomes de C ainsi que les produits d'addition desdits diisocyanates et d'alcools aliphatiques trifonctionnels.

5. Procédé suivant la revendication 2, **caractérisé en ce que** le composé A1 est choisi parmi le isocyanurate et le biuret du diisocyanate d'hexaméthylène ou du diisocyanate d'isophorone.

6. Procédé suivant la revendication 3, **caractérisé en ce que** le rapport pondéral entre le composé isocyanate A1a et le composé isocyanate A1b est de l'ordre de 1/5 à 5/1.

7. Procédé suivant la revendication 1, **caractérisé en ce que** le composant A contient un diisocyanate A2 et un triisocyanate A1 dans un rapport molaire de A2/A1 de l'ordre de 5/1 à 1/10.

8. Procédé suivant la revendication 1, **caractérisé en ce que** le composé B1 est un ester de l'acide acrylique ou de l'acide méthacrylique avec un diol ou polyol aliphatique, l'ester présentant encore au moins un groupe OH libre.

9. Procédé suivant la revendication 8, **caractérisé en ce que** le composé B1 est choisi parmi du (méth)acrylate de 2-hydroxyéthyle, du (méth)acrylate d'hydroxypropyle, du (méth)acrylate de 1,4-butanediol, du mono- et du di-(méth)acrylate de triméthylolpropane et du tri(méth)acrylate de pentaérythrite.

10. Procédé suivant la revendication 8, **caractérisé en ce que** le composant B contient au moins deux composés différents B1a et B1b dans un rapport molaire B1a/B1b de l'ordre de 1/10 à 10/1.

11. Prépolymères PU contenant des groupes uréthanne, durcissables sous un rayonnement, que l'on peut obtenir suivant un procédé selon la revendication 1.

12. Composition durcissable sous un rayonnement, contenant au moins un prépolymère PU suivant la revendication 11 ainsi qu'éventuellement des adjuvants courants.

13. Composition durcissable sous un rayonnement suivant la revendication 12, contenant
i) 20 à 90% en poids d'au moins un prépolymère PU suivant la revendication 11 (composant PU),
ii) 10 à 80% en poids d'au moins un composé de faible poids moléculaire, qui contient au moins une double liaison polymérisable, éthyléniquement insaturée (composant S), et
iii) jusqu'à 20% en poids, par rapport au poids total des composants PU et S, d'adjuvants courants,
à la condition que la somme des quantités pondérales des composants PU et S donne 100% en poids.

14. Utilisation de prépolymères PU suivant la revendication 11 ou des compositions durcissables sous un rayonnement suivant l'une des revendications 12 et 13, pour le revêtement de substrats.

15. Utilisation suivant la revendication 14, dans laquelle le substrat est un métal ou un métal revêtu.

16. Procédé de revêtement de substrats, **caractérisé en ce qu'**on applique un prépolymère PU suivant la revendication 11 ou une composition durcissable sous un rayonnement suivant l'une des revendications 12 et 13 sur le substrat à revêtir, qu'on élimine éventuellement du solvant présent et ensuite qu'on durcit par exposition à un rayonnement U.V. ou électronique.

17. Substrat revêtu qui peut être obtenu par un procédé suivant la revendication 16.
